# EUROPEAN PATENT APPLICATION

(11) **EP 1 489 347 A1**
(43) Date of publication of application: **22.12.2004**
(21) Application number: 03425392.2
(22) Date of filing: 16.06.2003
(51) Int. Cl.: F17C 9/02, F17C 7/04

(54) **Method and apparatus for generating compressed air from liquefied air, for supplying compressed air to an engine**

(71) Applicant: Sincron S.r.l., 20124 Milano (IT)
(72) Inventor: Russo, Vitaliano, 20135 Milano (IT)
(74) Representative: Botti, Mario

(57) **Abstract**

An engine unit (1) for urban traction, considerably favourable from the ecological point of view and of great autonomy, comprises a compressed-air engine (3), a liquid-air tank (28), and means (M) for gasifying the liquid air into compressed air for supplying the engine.

## Description

### Field of Application

The present invention relates to an engine unit, particularly, but not limited to, for urban traction, of the type comprising an engine supplied with compressed air.

As it is known, particularly in the field of urban traction, which is in the field of both public and commercial transport as well as of private transport in the urban network, there is the need of environmentally friendly vehicles, in practice non polluting. So, the invention is particularly intended for vehicles such as taxis, urban buses, as well as engines for industrial factories , such as self-propelling machines in general, i.e. in railway stations, obviously besides private vehicles for prevailing urban use.

### Prior Art

Vehicles have been proposed equipped with an engine unit wherein a compressed-air tank is in communication with an engine supplied with said compressed air. These vehicles are really less polluting but suffer from the well known drawback of scarce autonomy. Moreover, also their efficiency is low, because the initial pressure of the compressed air is too high for use in the engine and must be reduced, with loss of energy and further reduction of autonomy.

The underlying problem of this invention is to provide an engine unit as indicated, which satisfies the above specified need, simultaneously overcoming the afore-mentioned drawback with reference to prior art.

This problem is solved by an engine unit as specified being characterised in that it comprises a liquid air tank in communication with the engine and means for gasifying the liquid air, thus obtaining compressed air.

### Brief Description of the Drawings

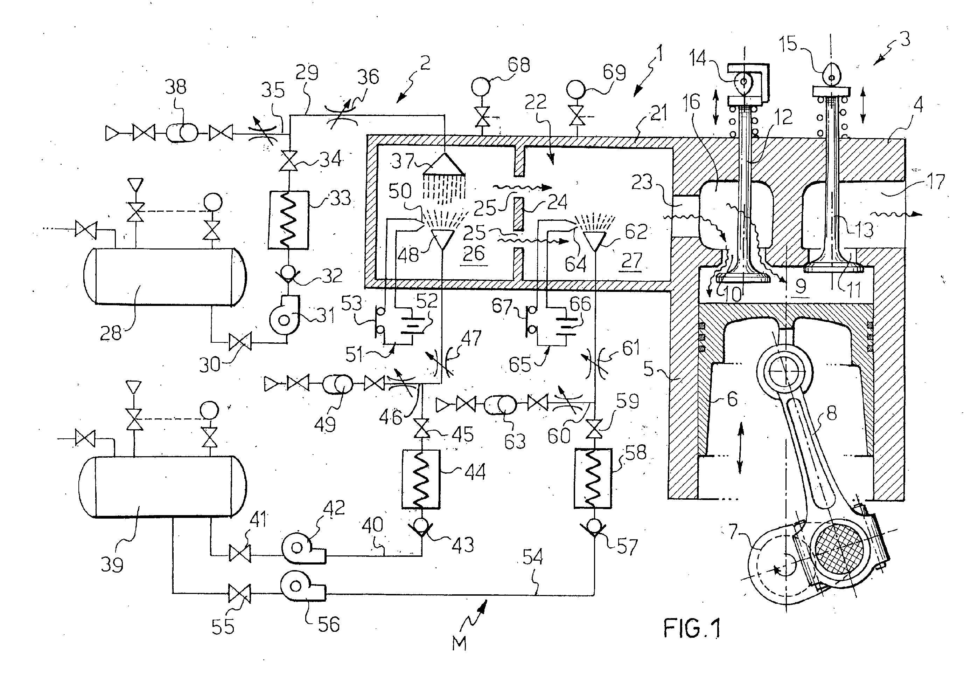

Figure 1 is a schematic view of an engine unit according to the invention.
Figure 2 is an operation diagram of the trend of the pressure according to the volume.

### Detailed Description of the Invention

With reference to the drawings, 1 globally indicates an engine unit according to the invention. The engine unit 1, mounted on board of a vehicle particularly indicated for urban transport, comprises a compressed-air generator 2, and an engine 3, supplied with the compressed air from the generator 2.

The engine 3, in the example, is an engine of the alternative type, that is a piston engine. The engine 3 is represented, in the drawing, limitedly to a monoblock 4, a cylinder 5 of a plurality of cylinders, a piston 6 movable within the cylinder 5, in order to transmit motion to a crankshaft 7 through a rod 8, a chamber 9 defined within the cylinder 5, as well as intake and exhaust ducts 10, 11, so as to put into communication the chamber 9 with intake and exhaust manifolds 16 and 17, through respective intake and exhaust valves 12, 13, which are driven to open by respective cams 14, 15 and to close either by springs or desmodromically.

The compressed-air generator 2 comprises a close housing 21 wherein a gasification chamber 22 is formed. The gasification chamber 22 is in fluid communication with the intake manifold 16 through a port 23, and further with the chamber 9 through the intake duct 10.

Preferably, the gasification chamber 22 is split, because of a wall 24 provided with perforations 25 being in the housing 21, into a first saturated-steam combustion chamber 26 and a second, overheated combustion chamber 27 facing the port 23.

The compressed-air generator 2 comprises a liquid air tank 28, in practice a liquid air cryogenic cylinder.

The gasification chamber 22, and precisely the first chamber 26, is connected to the liquid-air tank 28 through a piping 29. Along the piping 29, stating from the tank 28, a cutoff valve 30, a pump 31, a check valve 32, a heat exchanger 33, a cutoff valve 34, a branch line 35, and a flow control valve 36 are arranged, and finally a diffuser 37 open in the first chamber is arranged at the end of the piping. The branch line 35 is provided with a settable accumulator 38.

In order to gasify liquid air, the compressed-air generator 2 comprises gasifying means M, which include a tank for liquid fuel 39. The liquid fuel may be liquid methane or another hydrocarbon, but preferably liquid hydrogen is used, in practice a cryogenic cylinder of liquid hydrogen.

The gasification chamber 22, and precisely the first chamber 26, is connected to the liquid-hydrogen tank 39 through a piping 40. Along the piping 40, starting from the tank 39, a cutoff valve 41, a pump 42, a check valve 43, a heat exchanger 44, a cutoff valve 45, a branch line 46, a flow control valve 47 and finally a diffuser 48, open in the first chamber and facing the diffuser 37, are arranged. The branch line 46 is provided with a settable accumulator 49.

The first chamber 26 is provided with a pilot igniter 50 facing the diffuser 48. The pilot igniter 50 is supplied by an electric circuit 51, which comprises power source 52 and switch 53.

The gasification chamber 22, and precisely the second chamber 27, is connected to the liquid-hydrogen tank 39 through a piping 54. Along the piping 54, substantially as already described for piping 40, a cutoff valve 55, a pump 56, a check valve 57, a heat exchanger 58, a cutoff valve 59, a branch line 60, a flow control valve 61 and finally a diffuser 62 are arranged. The branch line 60 is provided with a settable accumulator 63.

Also the second chamber 27 is provided with a pilot igniter 64. This igniter faces the diffuser 62 and it is supplied by an electric circuit 65 comprising power source 66 and switch 67.

The power sources 52 and 66, in practice a conventional battery, are conventionally rechargeable through a dynamo, not shown, driven by the engine.

The accumulators 38, 49 and 63 are conventional ones and are provided with fill and cutoff valves, and a throttle.

Also tanks 28 and 39 are conventional and they are both provided with vent, fill valve and pressure gauge, with respective cutoff valves.

Pressure gauges 68, 69 and, preferably, pressure transducers, are provided on each chamber 26 and 27.

In operation, the air and the hydrogen from the respective tanks 28 and 39 are forced by respective pumps 31 and 42 to diffuse into the gasification chamber 22 and precisely the first chamber 26 and they reach mutual contact. Due to the pilot igniter 50, combustion of the hydrogen with part of the air and more exactly with the oxygen of a part thereof takes place. This combustion takes place under saturated-steam conditions: actually the first chamber 26 now contains oxygen-depleted air and saturated steam, both under the same pressure, substantially between 10 and 30 atmospheres, and preferably 20 atmospheres.

These gases pass from the first chamber 26 to the second chamber 27 through the perforations 25 of the wall 24.

The combustion continues in the second chamber 27, because of the diffusion therein of hydrogen coming from the same tank 39, under effect of the pump 56, because of the presence of the pilot igniter 64, with further part of the air and more exactly with the oxygen of further part thereof. The second chamber 27 now contains a mixture of air, further depleted of oxygen and overheated steam, both at the same pressure, substantially between 10 and 30 atmospheres, preferably 20 atmospheres.

It is to be noted that, while passing through the heat exchanger 33, the liquid air undergoes a starting gasification by extracting heat from the ambient atmosphere. Condensation and any freeze are thus effectively prevented.

Likewise the liquid hydrogen undergoes a starting gasification on passing through heat exchanger 44 and on passing through heat exchanger 58.

Thanks to the heat exchangers 33, 44, 58, which preliminarily perform a starting gasification of the liquid air as well as of the liquid hydrogen by extracting heat from the ambient, the energy to be transmitted to the liquid air and to the hydrogen in order to gasify the liquid air thanks to the combustion of the hydrogen with the oxygen of the air itself is thus reduced.

It should be noted that, thanks to the settable accumulators 38, 49, 63, a stabilisation of possible pulses of the pressure values inside the gasification chamber is achieved.

The gas mixture released by gasifying liquid air, which is in practice compressed air, passes to the intake manifold 16 through the port 23 and from here, through the intake valve 12 which is open each time, into the chamber 9 of the respective cylinder 5. Here, because of its pressure, it expands by shifting the piston 6 along its active stroke in the direction of arrow F₁, thus performing the desired mechanical work. During the exhaust stroke in the direction of arrow F₂, the piston ejects the gas mixture through an exhaust valve 13, the mixture being now at ambient pressure, into the exhaust manifold 17, and herefrom into the environment, almost at ambient pressure and temperature.

At this point the operation is repeated, with each piston completing a power and an exhaust stroke at each double stroke.

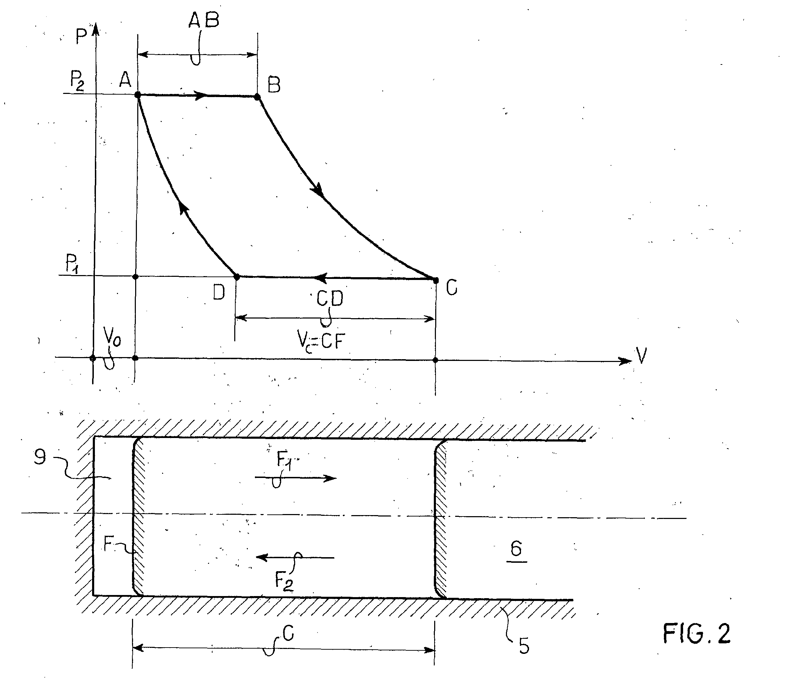

With reference to Figure 2, the working cycle of the engine unit is described. In particular in a diagram with the cylinder pressure p plotted along the ordinate axis and the cylinder swept volume V along the abscissa axis. V_{c} is the product of the piston stroke c for its section F, whereas V₀ is the minimum volume in the cylinder, also called dead space, when the piston is at its top dead centre.

P₂ is the highest pressure inside the cylinder, and p₁ is the lowest pressure, the latter being approximately the same as the ambient pressure.

From A to C via B the working stroke (arrow F₁) of the piston f is achieved with expansion of the compressed air. From C to A via D the piston exhaust stroke (arrow F₂) is achieved with expulsion of the exhaust air.

From A to B, the intake valve 12 is open and the piston is pushed by a constant pressure. From B to C, the intake valve 12 is closed and the cylinder is pushed by gas expansion, until the exhaust valve 13 is opened under conditions of pressure p₁ approximately equal to ambient pressure.

From C to D, the cylinder is emptied of the spent gas, which is discharged in the environment.

From D to A the valve 13 is closed and a pressure increase occurs within the cylinder until the pressure value p₂ is reached, being equal to that of the gasification chamber.

It should be noted that the duration AB for opening the intake valve 12 is selected so that the gas mixture, at the end of the piston power stroke, has substantially attained substantially ambient pressure and temperature.

It is to be noted that the duration CD for opening the exhaust valve 13 is selected so that, at the end of the piston exhaust stroke, when the intake valve 12 has to open, the same pressure as in the gasification chamber prevails in the cylinder.

The invention further relates to a method of generating compressed air to supply an engine and to a compressed-air generator for carrying out the method.

According to the invention, the method comprises the steps of providing liquid air and a fuel, preferably liquid fuel and preferably liquid hydrogen, of gasifying the liquid air by burning the hydrogen with the liquid air oxygen, with the presence of a pilot igniter, thus obtaining compressed air at a pressure of approximately 10 to 30 atmospheres and preferably 20 atmospheres and of supplying the engine with compressed air thus produced. According to this method, a starting gasification is performed by heat energy extracted from the ambient through a heat exchanger.

The main advantage of the engine unit according to the invention is its non-polluting operation: in fact the required power practically comes from the expansion of compressed air achieved by gasifying liquid air. This is obtained in advance in various known ways, in industrial places far from inhabited centres. As for its gasification for obtaining compressed air, first the heat exchanger extracts energy from the ambient and then there is combustion of a very small quantity of fuel.

It is then to be noted that in the preferred embodiment wherein liquid hydrogen is used as fuel, no carbon- pollutant is released. In addition, because of particularly favourable temperatures, pollutants deriving from nitrogen oxidation are totally absent.

A particularly silent operation is also to be expected thanks to the fact that both the intake and exhaust valves are under equal pressure conditions, downstream and upstream, when they open.

A further advantage of the engine unit of the invention is its autonomy, not lower than the one required for urban transport.

A further advantage of the engine unit of the invention is its higher intrinsic safety reached because of the dramatically reduced amount of fuel required for its operation.

A further advantage of the invention unit is that it can be manufactured by using in practice existing engines, both very commonly used piston engines with connecting-rods and cranks or, in case, of the Wenckel type with very poor changes.

Obviously a skilled in the art can apply several modifications and variations to the engine unit, to the method and to the generator above-described, in order to satisfy occasional and specific needs, all of them included in the scope of the invention, as defined in the following claims.

## Claims

1. An engine unit, particularly for urban transport, of the type comprising an engine (3) supplied with compressed air, **characterised in that** it comprises a liquid air tank (28) in communication with the engine (3), and comprises a means (M) for gasifying the liquid air, thus obtaining compressed air.

2. An engine unit according to Claim 1, **characterised in that** the gasifying means (M) comprise a heat exchanger (33) between the liquid air tank (28) and the engine (3), for a starting gasification of the liquid air.

3. An engine unit according to Claim 1, **characterised in that** the gasifying means (M) comprise a gasification chamber (22) in communication with the liquid air tank (28), and a liquid fuel tank (39) in communication with the gasification chamber (22) for combustion of the liquid fuel with the oxygen of the liquid air.

4. An engine unit according to Claim 3, **characterised in that** the liquid fuel is liquid hydrogen.

5. An engine unit according to Claim 3, **characterised in that** the gasifying means (M) comprise a pilot igniter (50,64) inside said gasification chamber (22) to promote said combustion.

6. An engine unit according to Claim 1, **characterised in that** the gasifying means (M) comprise a pump (31) between the liquid air tank (28) and the engine (3).

7. An engine unit according to Claim 3, **characterised in that** it comprises a pump (42,56) between the liquid fuel tank (39) and the gasification chamber (22).

8. An engine unit according to Claims 6 and 7, **characterised in that** the pumps (31,42,56) are variable delivery pumps used for controlling the engine speed.

9. An engine unit according to Claim 4, **characterised in that** it comprises a heat exchanger (44,58) between the tank (39) and the gasification chamber (22) for starting gasification of the liquid hydrogen.

10. An engine unit according to Claim 3, **characterised in that** the gasification chamber (22) is split into a first gasification chamber (26) and a second gasification chamber (27) for combustion of the liquid fuel with the oxygen of the air under conditions of saturated steam and overheated steam respectively.

11. An engine unit according to Claim 1, **characterised in that** the engine (3) comprises an intake valve (12) which is controlled to close for a predetermined duration (AB).

12. An engine unit according to Claim 1, **characterised in that** the engine (3) comprises an exhaust valve (13) which is controlled to close for a predetermined duration (CD).

13. A method for generating compressed air for supplying an engine (3) particularly for urban traction, **characterised in that** it comprises the step of gasifying liquid air thus obtaining compressed air and supplying the engine (3) with said compressed air.

14. A method according to Claim 13, **characterised in that** the gasification is achieved by a heat exchanger extracting heat from the ambient atmosphere.

15. A method according to Claim 13, **characterised in that** the gasification is achieved by combustion of a predetermined limited amount of a liquid fuel.

16. A method according to Claim 15, **characterised in that** the combustion is performed with said liquid air.

17. A method according to Claim 16, **characterised in that** the liquid fuel is liquid hydrogen.

18. A method according to Claim 15, **characterised in that** the combustion takes place in the presence of a pilot igniter.

19. A method according to Claim 15, **characterised in that** said predetermined limited amount of the liquid fuel is selected to obtain compressed air at a predetermined pressure comprised between 10 and 30 atmospheres and preferably 20 atmospheres.

20. A method according to Claim 15, **characterised in that** it comprises the step of starting gasification of the liquid fuel in a heat exchanger (44,58).

21. A generator of compressed air for supplying an engine (3), particularly an engine for urban traction and the like, **characterised in that** it comprises a liquid-air tank (28) and gasifying means (M) for gasifying the liquid air into compressed air, in communication with a cylinder (5) of the engine (3) through a compressed-air intake valve (12).

22. A generator according to Claim 21, **characterised in that** the gasifying means (M) comprise a heat exchanger (33) between the liquid-air tank (28) and the engine (3) for starting gasification of the liquid air.

23. A generator according to Claim 21, **characterised in that** the gasifying means (M) comprise a gasification chamber (22) in communication with the liquid-air tank (29), and a liquid fuel tank (39) in communication with the gasification chamber (22) for combustion of the liquid fuel withy the oxygen of the liquid air.

24. A generator according to Claim 23, **characterised in that** the liquid fuel is liquid hydrogen.

25. A generator according to Claim 23, **characterised in that** the gasifying means (M) comprise a pilot igniter (50,64) within said gasification chamber (22) to promote said combustion.

26. A generator according to Claim 21, **characterised in that** the gasifying means (M) comprise a pump (31) between the liquid-air tank (28) and the engine (3).

27. A generator according to Claim 23, **characterised in that** it comprises a pump (42,56) between the liquid-fuel tank (39) and the gasification chamber (22).

28. A generator according to Claims 26 and 27, **characterised in that** the pumps (31,42,56) are variable delivery pumps for controlling the engine (3) speed.

29. A generator according to Claim 24, **characterised in that** it comprises a heat exchanger (44,58) between the tank (39) and the gasification chamber (22) for a starting gasification of the liquid hydrogen.

30. A generator according to Claim 23, **characterised in that** the gasification chamber (22) is split into a first gasification chamber (26) and a second gasification chamber (27) for combustion of the hydrogen with the oxygen of the air under conditions of saturated steam and overheated steam respectively.
